# EUROPEAN PATENT SPECIFICATION

(11) **EP 1 440 248 B1**
(45) Date of publication and mention of the grant of the patent: **02.03.2005**
(21) Application number: 01982713.8
(22) Date of filing: 31.10.2001
(51) Int. Cl.: F16D 65/097

(54) **FLAT SPRING FOR PRELOADING DISC BRAKE PADS**
BLATTFEDERELEMENT ZUM VERSPANNEN VON SCHEIBENBREMSBELÄGEN
RESSORT PLAT POUR LE PRECHARGEMENT DE PATINS DE FREIN A DISQUE

(43) Date of publication of application: 28.07.2004
(73) Proprietor: Freni Brembo S.p.A., 24035 Curno (Bergamo) (IT)
(72) Inventor: CRIPPA, Cristian, I-24031 Almenno San Salvatore,Bergamo (IT)
(74) Representative: Long, Giorgio
(86) International application number: PCT/IT2001/000552
(87) International publication number: WO 2003/038297

(56) References cited:
- EP-A- 0 794 349
- GB-A- 2 231 928
- US-A- 4 072 216
- US-A- 4 422 534
- US-A- 4 538 708
- US-A- 5 947 234
- US-B1- 6 260 670
- PATENT ABSTRACTS OF JAPAN vol. 004, no. 161 (M-040), 11 November 1980 (1980-11-11) -& JP 55 109837 A (AISIN SEIKI CO LTD), 23 August 1980 (1980-08-23)

## Description

The present invention relates to a flat spring for pads of braking systems, in particular for vehicle braking systems.

As is widely known, the braking systems which are currently on the market generally have a caliper body extending astride a braking disk, at least one pair of pads facing the disk from opposite sides and restrained on the caliper body which houses them in suitable seats, each pad being provided with a plate for supporting a friction lining, as well as stop means formed in the plates and facing respective complementary stop means formed in the caliper body for restraining the pads in a direction tangential to the disk.

In particular, the pads have to be kept away from the braking disk and at the same time bearing on the seats when the braking system is inactive, to allow the disk to rotate freely and to prevent unnecessary wear of the pads.

One type of system for fulfilling this dual function is represented by a cross-shaped flat spring.

When a cross-shaped flat spring is mounted on a brake caliper, it is usually positioned on the top of the caliper body at the level of the upper opening thereof and is composed of a first metal strip and a second metal strip which are disposed in a cross-shaped arrangement and are connected to one another with the use of known connection means.

The first strip is arranged along the upper opening in the region of and close to the braking disk so as to cover substantially the entire circumferential portion of the disk which faces the opening.

The first strip has seats for engaging respective pins for restraining the spring on the caliper body. In particular, these seats are positioned at the opposite ends of the first strip.

The second strip is arranged substantially perpendicular to the first strip so as to intersect the first strip in a central portion thereof.

The second strip carries thrust elements at its opposite ends, for acting on the pads in order to keep them away from the braking disk.

However, a spring such as that just described has the great disadvantage that it prevents adequate dissipation of the heat which is generated during braking, owing to the friction which is created between the surfaces of the braking disk and the friction surfaces of the pads.

In fact the first strip of the spring, as specified above, is arranged so as to cover, at the top, precisely that circumferential portion of the braking disk in which the overheating occurs.

The above-mentioned disadvantage is noticed to a greater extend in ventilated disks, in which the free flow of hot air out of the peripheral openings of the ventilation ducts is greatly obstructed.

Moreover, the spring itself is subject to overheating and consequent degeneration of the mechanical characteristics of the material of which it is made.

As a result, the functional capacity of the spring is dangerously compromised. EP-A-0 794349 describes a flat spring for disc brake pads wherein a first strip of said flat spring is positioned along the upper region of the disc brake where the greater heat can develop. Consequently, said flat spring can dangerously overheat.

There is consequently a great need to provide a spring for pads of braking systems which permits easy ventilation at the level of the caliper body whilst the functional capacity of the spring remains substantially unchanged.

The problem upon which the present invention is based is therefore that of devising a flat spring for pads of braking systems which has structural and functional characteristics such as to satisfy the above-mentioned needs and at the same time to overcome the disadvantages of springs for pads of braking systems of the prior art.

In addressing the above-mentioned problems, however, it is of fundamental importance to bear in mind that a flat spring of any type must be constructed in a manner such that the structural properties of the spring itself are not weakened.

This problem is solved in accordance with the features described in the appended main claim.

Further characteristics and the advantages of the flat spring for pads of braking systems according to the present invention will become clear from the following description of some preferred embodiments thereof, given by way of non-limiting example with reference to the appended drawings, in which:
Figure 1A is a view of a flat spring according to the invention, from below,
Figure 1B is a front view of the spring of Figure 1A,
Figure 1C is a side view of the spring of Figure 1A,
Figure 1D is a perspective view of the spring of Figure 1A associated with corresponding pads,
Figure 2A is an exploded view of a caliper for a brake disk with the flat spring of Figures 1A to 1D,
Figure 2B is a perspective view of the caliper of Figure 2A in the assembled configuration,
Figure 2C is a top view of the caliper of Figure 2A in the assembled configuration,
Figure 3A is a view of a first variant of the flat spring according to the invention, from below,
Figure 3B is a front view of the spring of Figure 3A,
Figure 3C is a side view of the spring of Figure 3A,
Figure 3D is a perspective view of the spring of Figure 3A associated with corresponding pads,
Figure 4 is a perspective view of a second variant of the flat spring associated with corresponding pads,
Figure 5 is a perspective view of a third variant of the flat spring associated with corresponding pads,
Figure 6 is a perspective view of a fourth variant of the flat spring associated with corresponding pads,
Figure 7 is a perspective view of a fifth variant of the flat spring associated with corresponding pads.

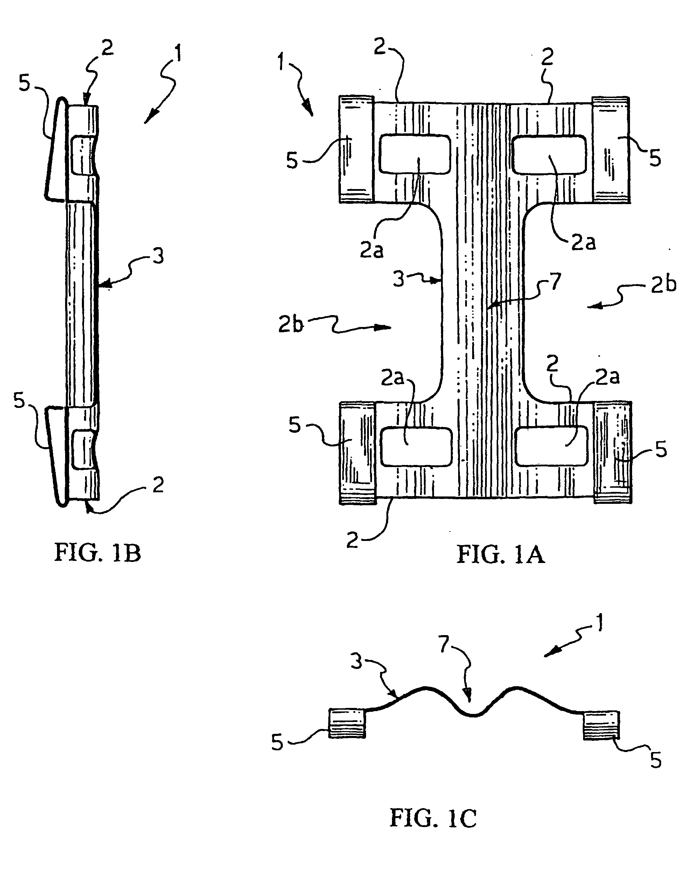

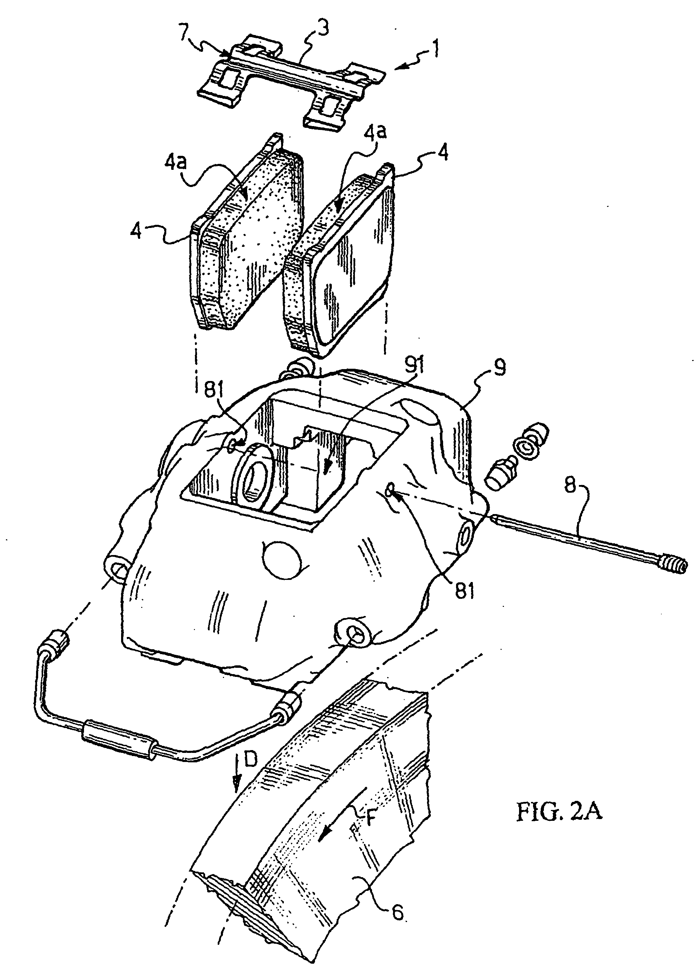

With reference to appended Figures 1A to 2C, a flat spring according to the present invention is generally indicated 1.

The flat spring 1 has a substantially flat structure comprising transfer arms 2 which are connected by means of at least one first element 3.

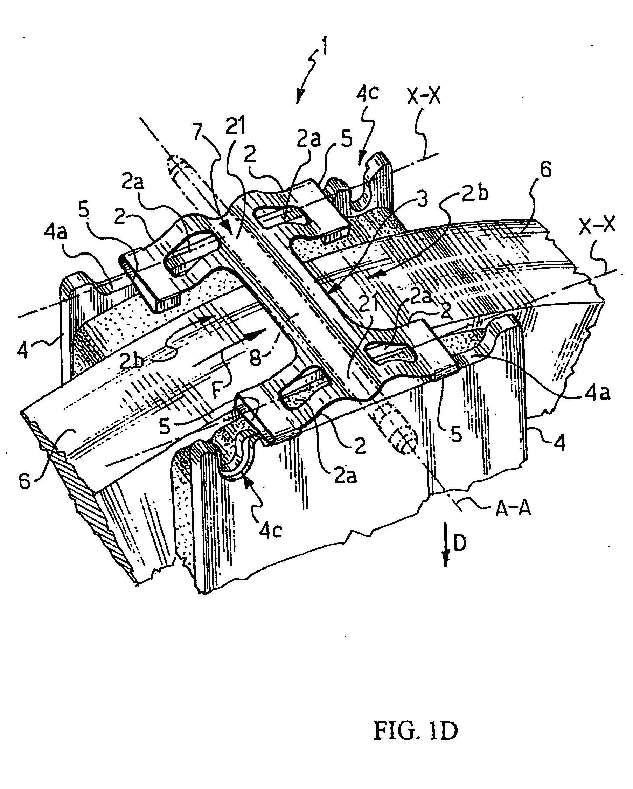

The transfer arms 2 are disposed on the upper surfaces 4a of corresponding pads 4 as shown in Figure 1D.

The expression "upper surface" or "upper side" is intended to define in general herein any surface having a perpendicular extending away from the axis of a braking disk.

The expression "rear surface" or "rear side", on the other hand, indicates the surface facing in the opposite direction to the direction of rotation of a braking disk, indicated by the arrow F in the drawings.

The expression "downwards", however, is intended in general to define the direction towards the axis of rotation of a braking disk and is defined by the arrow D in the drawings.

The transfer arms 2 have thrust elements 5 for urging the pads 4 at least away from a braking disk 6 when the spring 1 is mounted in a caliper body.

These thrust elements 5 are preferably such as also to urge the pads 4 downwards.

In particular, the thrust elements 5 comprise respective downwardly bent end portions of the same plate which forms the transfer arms 2.

With reference to Figures 1D and 1C, preferably, two transfer arms 2 extend along a common axis X-X on the upper surface 4a of each pad and have an undulating lateral profile.

Moreover, the transfer arms 2 may advantageously comprise ventilation windows 2a.

According to a preferred embodiment shown in Figure 1D, each pad 4 comprises a recess 4c positioned in its upper surface 4a so as to constitute a seat for housing a wear sensor which can indicate the wear of the friction material.

As mentioned above, the transfer arms 2 are connected by means of at least a first element 3 provided with at least one seat 7 for housing a pin 8 for restraining the spring 1 on a caliper body 9 (Figures 2A to 2C).

In other words, the first element 3 connects the transfer arms 2 in the manner of a bridge so as to form the seat 7 for the pin 8.

The first element 3 preferably extends substantially perpendicular to the axes X-X of the transfer arms 2.

Each thrust element 5 is advantageously connected to the seat 7 individually by means of the respective transfer arm 2.

The mounting of the flat spring 1 on a caliper body 9 will now be described briefly below, with particular reference to Figures 2A to 2C.

In Figure 2A, two pads 4 for a braking disk 6, for example, of the type used in vehicle braking systems, are fitted in a corresponding caliper body 9 in suitable seats or pockets (not shown), in wholly conventional manner.

In particular, the pads 4 are fitted from the side of the caliper body 9 having the upper opening 91.

The spring 1 is then placed on the upper surface 4a of each pad 4 and is held there by a pin 8 for restraining it on the caliper body 9.

In particular, the restraining pin 8 is fitted through suitable through-holes 81 in the caliper body 9 so as to engage the seat 7 of the first element 3 of the spring 1.

Clearly this operation restrains the spring 1 on the upper surface 4a of the pad 4 and at the same time, restrains the pads in their pockets.

The restraining pin 8 in turn acts on the spring 1, bearing on at least an area 21 of its seat 7 (Figure 1D).

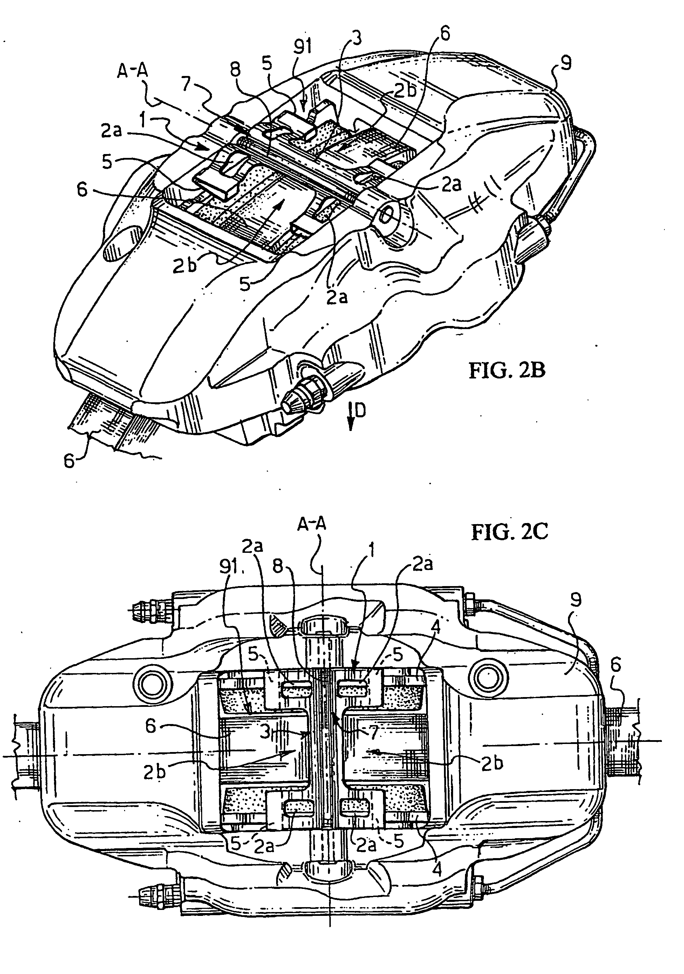

As can be appreciated from figures 2B and 2C, when the caliper body 9 is in its assembled configuration, its upper opening 91 facing the disk is substantially clear.

In other words, the circumferential portion of the upper surface of the braking disk 6 which is disposed between the pads 4 faces the opening 91 of the caliper body 9 in an unobstructed manner.

This is achieved by virtue of the particular construction of the spring 1 in which each of the arms 2 for transferring the load applied to the spring 1 extends from the at least one area 21 of the seat 7, substantially in a straight line as far as the respective thrust element 5 so that openings 2b are created in the spring and are disposed in the vicinity of the braking disk 6 when it is mounted and inoperative conditions.

In particular, the above-mentioned at least one area 21 of the seat 7 represents that portion of the seat 7 on which the restraining pin 8 acts, that is, the area in which the spring is preloaded by being forced between the restraining pin 8 and the pads 4.

In other words, the at least one area 21 is the loading area representing the portion of the first element 3 in which the reaction to the force exerted by the restraining pin 8 takes place, that is, the area which the restraining pin 8 abuts.

It is clear from the foregoing description that, according to a preferred embodiment, the flat spring 1 is characterized in that each thrust element 5 is connected to the at least one seat 7 individually by means of the respective transfer arm 2.

The openings 2b advantageously permit suitable dissipation of the heat which is generated during braking, owing to the friction created between the surfaces of the braking disk and the friction surfaces of the pads.

In other words, the first element 3 has been devised in a manner such as to coincide substantially with the seat 7 of the locking pin 8, thus reducing as far as possible the superfluous portions of the flat spring, that is, those portions of the material of the spring which prevent the above-mentioned dissipation of heat.

In addition, the ventilation openings 2a formed in the transfer arms 2 offer further ventilation passages towards the exterior of the braking disk, thus increasing the capacity to dissipate the above-mentioned heat.

A further advantage afforded by the above-described structure of the spring lies in the fact that the spring is no longer subject to a risk of overheating, and consequent degeneration of the mechanical characteristics of the material of which it is composed.

As well as the above-mentioned advantages, it should be borne in mind that the particular arrangement of the transfer arms 2 enables the load of the spring 1 to be transferred to the thrust elements 5 in an ideal manner.

In fact, the load transfer takes place by means of elements each extending along a substantially straight path.

Many variants of the spring according to the present invention may be produced.

Some examples of variants are described below purely by way of non-limiting indication.

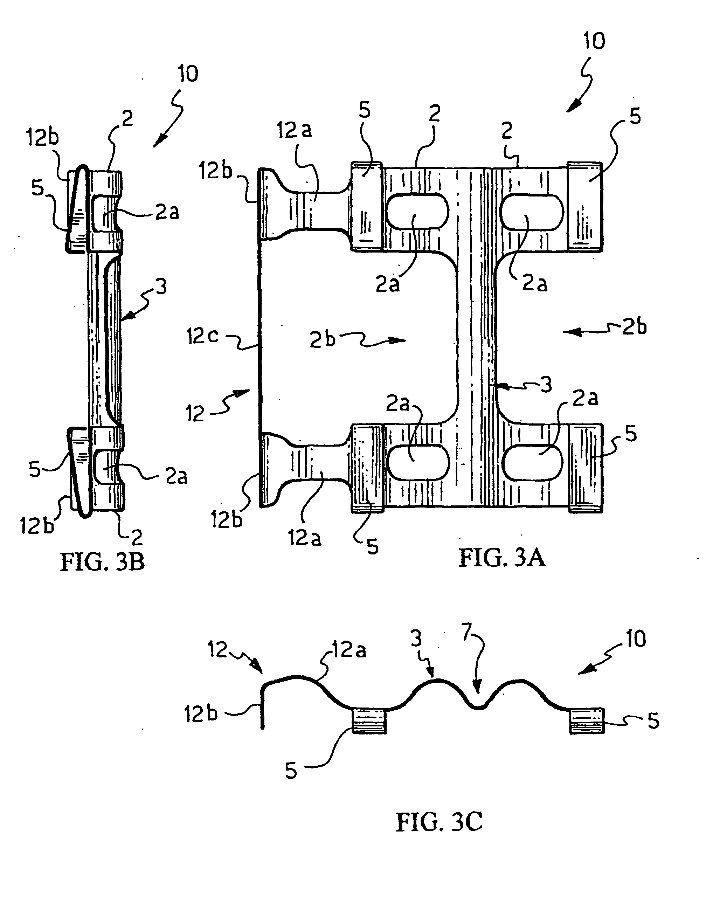

In Figures 3A to 3D, the flat spring 10 is substantially similar in shape to the spring 1 described above and the parts in common therewith are therefore indicated by the same reference numerals and will not be described further here.

In particular, the spring 10 comprises catch means 12 which can keep the pads bearing against the shoulders of the pockets of the caliper body which constitute the surfaces reacting to the braking force.

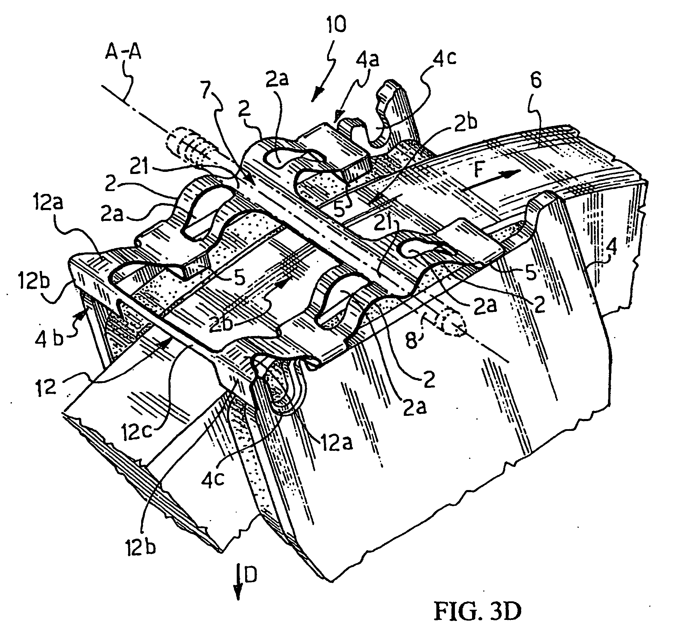

The catch means 12 preferably comprise appendages 12a extending from the ends of the transfer arms 2 that are disposed closest to the rear ends 4b of the pads, and terminating in respective hook-shaped portions 12b, as shown best in Figure 3D.

In particular, the hook-shaped portions 12b abut the rear ends 4b of the pads 4 so as to keep the pads in abutment with the above-mentioned shoulders (not shown).

The hook-shaped portions 12b are connected to one another by means of a bridge 12c arranged in a manner such as to create the least obstruction to the passage of hot air towards the exterior of the caliper body.

In particular, the bridge 12c may be constituted by a plate arranged relative to the braking disk in a manner such as to have its profile directed substantially in a radial direction.

In this embodiment, as in the embodiment described with reference to Figure 1D, each pad 4 comprises a recess 4c positioned on its upper surface 4a so as to constitute a seat for housing a sensor for detecting wear of the friction material.

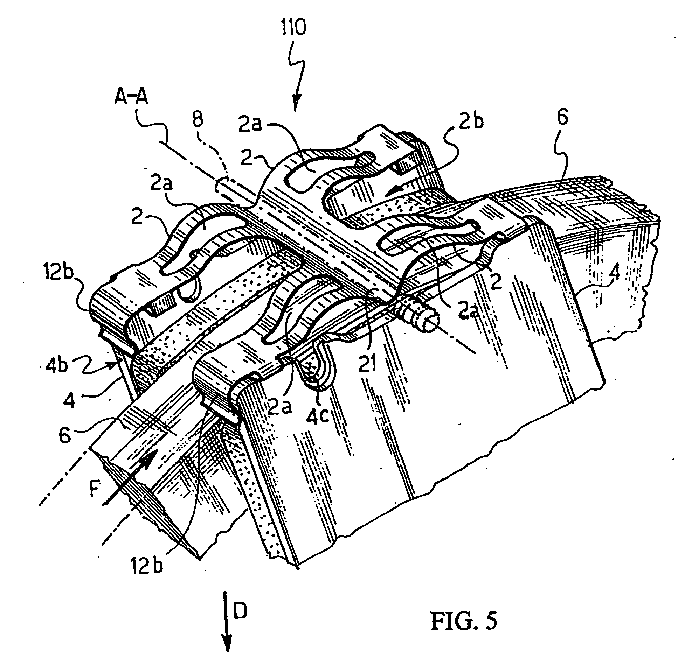

Figure 5 shows a variant of the spring 10 just described, in which the spring 110, which is of substantially the same shape as the spring 10, has its transfer arms 2 lengthened slightly so as to be adapted better to more extensive upper surfaces 4a of the pads 4, that is, to pads of larger dimensions.

The transfer arms 2 thus extend so as to cover substantially the entire upper surface 4a of each pad 4.

The catch means 12 consequently do not have the appendages 12a of the catch means of the spring 10. The catch means 12 also lack the bridge 12c connecting the hook-shaped portions 12b.

The above-described recess 4c for housing a wear sensor is also shown in identical manner in this variant.

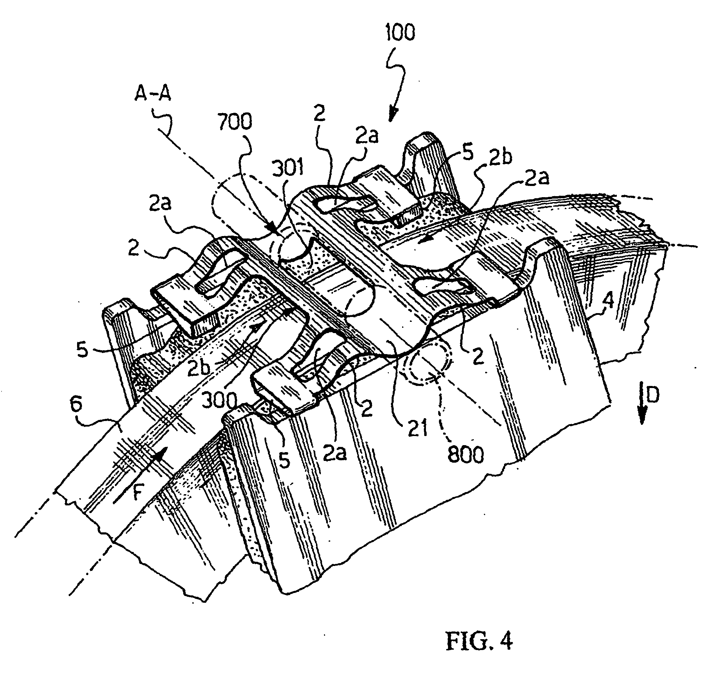

Figure 4 shows a further variant of the flat spring according to the present invention.

In particular, the spring 100 is substantially similar to the spring 1 described above, and the parts in common therewith are therefore indicated by the same reference numerals. The spring 100 also has a first bridge element 300 having a seat 700 for housing a restraining pin 800 of relatively large dimensions.

In this variant, however, to prevent excessive heating of the spring 100, the portion 300 may be provided with an ventilation opening 301.

It should be noted that, in all of the embodiments described up to now, the spring according to the invention differs completely from the cross-shaped spring of the prior art. In fact, unlike the latter, the flat spring 1, 10, 100 or 110 is substantially H-shaped, the two parallel arms of the H being represented by the transfer arms 2, whilst the bridge between the arms is represented by the first element 3, 300.

In other words, the thrust elements are connected to the first element, which forms the seat for the pin, by means of transfer arms that are directed transversely relative to the first element or, in other words, that extend away from the first element.

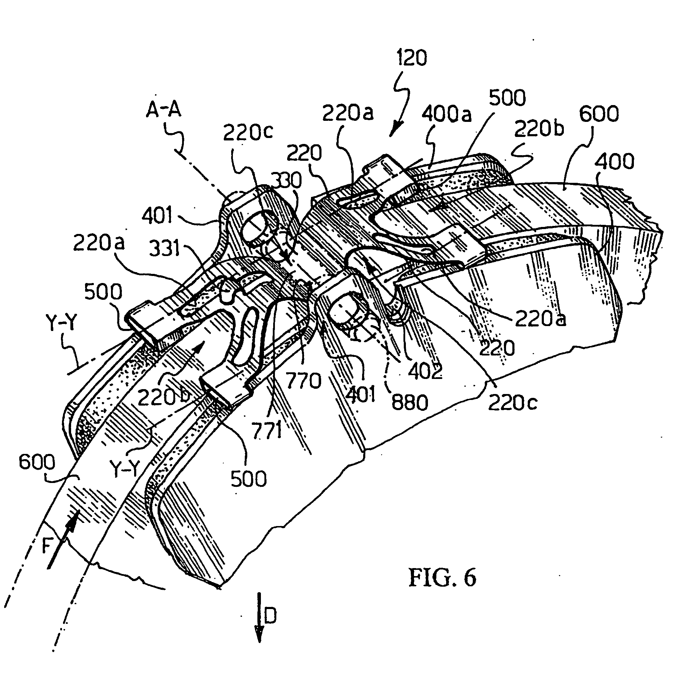

Figure 6 shows yet a further variant of the spring of the invention.

Unlike the springs 1, 10, 100 and 110 described above, the spring 120 is substantially X-shaped.

In particular, the transfer arms 220 are arranged so as to converge substantially towards a braking disk 600.

The ends of the transfer arms carry thrust elements 500 wholly similar to those described with reference to the previous embodiments.

It should be noted that two thrust elements 500 are arranged in a manner such as to lie along a common axis Y-Y on the upper surface 400a of each pad 400.

Moreover, the transfer arms 220, like the transfer arms 2 described above, also have a slightly undulating lateral profile.

The above-mentioned transfer arms 220 are also connected by a first element 330 provided with a seat 770 for housing a restraining pin 880 similar to that described above.

In particular, the transfer arms 220 are connected to one another by means of the first element 330 in a manner such as to create openings 220c between the thrust elements 500 lying on the same axis Y-Y, as well as openings 220b between thrust elements 500 disposed on opposite sides of the disk 600.

As described above, the seat 770 also has an area 771 which is subjected to loading by the restraining pin 880.

According to one embodiment, the flat spring 120 may have an appendage 331 formed at the level of the first element 330 by the cutting-out and bending of a piece of spring plate so as to form a retainer for a cable of an optional indicator (not shown) for indicating the degree of wear of the pads 400.

It should be noted that, in a further embodiment, the spring 120 enables the pads 400 to be provided with a slot 401 for engaging the restraining pin 800 so as to suspend the pads, so that they face the disk 600.

In this case, naturally, the pads 400 do not need to be housed in the seats formed in the caliper body, as described with reference to the previous embodiments.

Moreover, each pad has a recess 402 similar to the recess described above, for housing a wear sensor.

According to the various embodiments of the present invention just described, the openings 2b, 220b, 220c may also be defined as recesses in the peripheral edge of the spring 1, 10, 100, 110 or 120.

In particular, the openings 2b, 220b and 220c are advantageously formed at least substantially in the vicinity of the braking disk 6, 600.

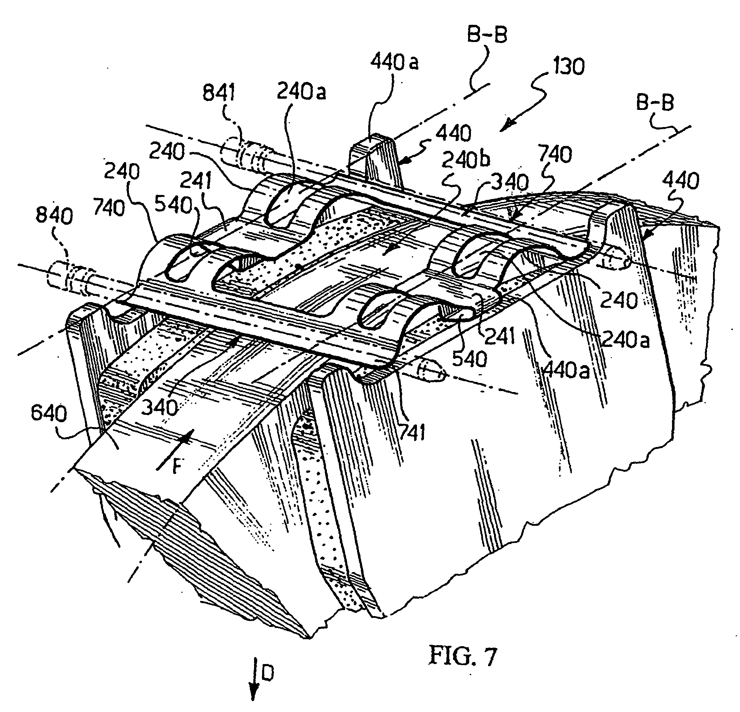

Figure 7 shows, according to yet a further variant of the invention, a spring 130 comprising two first elements 340 connected to one another by means of four transfer arms 240.

The first elements 340 extend in a substantially parallel manner above and between the two pads 440 and each has a seat 740 for housing a restraining pin 840.

As described with reference to the previous embodiments, each seat 740 also has at least one area 741 which is subjected to loading by the restraining pin 840.

The transfer arms 240 are positioned longitudinally in pairs along respective axes B-B on the upper surfaces 440a of respective pads 440 so as to form two connecting arms between the first elements 340.

Moreover, the transfer arms 240 are connected to one another end-to-end by means of connecting portions 241 carrying thrust elements 540.

The thrust elements 540 correspond to the thrust elements described above.

The transfer arms 240 preferably have ventilation windows 240a just the same as those described with reference to the previous embodiments.

The advantage afforded by this variant of the invention lies in the fact that the openings described in the previous embodiments are represented in this variant by a single large opening 240b which corresponds substantially to the upper opening of a caliper body (not shown) similar to that shown in Figure 2A and indicated 91.

In other words, the portions of the spring follow the rim of the upper window of the caliper body.

In fact, the flat spring 130 just described circumscribes the ventilation passage 240b with four sides arranged in two pairs of parallel sides represented by the first elements 340 and by the transfer arms 240, respectively.

According to yet another embodiment, the flat spring may be represented generally by at least one element, represented by the first element 3, 300, 330 and 340, which is arranged transversely relative to the working surfaces of the pads 4, 400, 440 facing a braking disk 6, 600, 640, and from which several arms, represented by the transfer arms 2, 220, 240, extend, terminating at the level of the upper surfaces 4a, 400a, 440a of the pads and carrying the thrust elements 5, 500, 540.

The flat spring according to the present invention is advantageously formed by a single piece of metal such as, for example, spring steel, in accordance with techniques widely known in the field.

The flat spring of the invention may alternatively be composed of several portions connected to one another by conventional connection means such as, for example, rivets, glues and restrained joints.

The particular embodiments of the spring described above may be modified according to preferences or particular requirements whilst nevertheless retaining the characteristic of the ventilation windows and openings described above.

As can be appreciated from the foregoing description, the flat spring according to the invention satisfies the needs referred to in the introductory portion of the present description and at the same time overcomes the disadvantages of the flat springs of the prior art.

Naturally, in order to satisfy contingent and specific requirements, a person skilled in the art may apply to the above-described flat spring many modifications and variations all of which, however, are included within the scope of the invention as defined by the appended claims.

## Claims

1. Flat spring (1; 10; 100; 110; 120; 130) for pads (4; 400; 440) of braking systems having a caliper body (9) extending astride a braking disk (6; 600; 640), the spring comprising thrust elements (5; 500; 540) which can urge the pads (4; 400; 440) at least away from the braking disk, as well as at least one first element (3; 300; 330; 340) having at least one seat (7; 700; 770; 740) which houses restraining means (8; 800; 880; 840) for restraining the spring (1; 10; 100; 110; 120; 130) on the caliper body (9), loading at least one area (21; 771; 741) of the seat (7; 700; 770; 740), **characterized in that** transfer arms (2; 220; 240) for transferring the load of the spring extend from the at least one area (21; 771; 741) of the seat (7; 700; 770; 740), each transfer arm extending substantially in a straight line as far as the respective thrust element (5; 500; 540) so that openings (2b; 220b; 240b) are created in the spring and are arranged in the vicinity of the braking disk (6; 600; 640) when the spring is in operative conditions.

2. Flat spring (1; 10; 100; 110; 120; 130) according to Claim 1 in which each thrust element (5; 500; 540) is connected to the at least one seat (7; 700; 770; 740) individually by means of the respective transfer arm (2; 220; 240).

3. Flat spring (1; 10; 100; 110; 120) according to Claim 1 or Claim 2 in which the transfer arms (2; 220) connect the thrust elements (5; 500) in a manner such as to create recesses (2b; 220b; 220c) in the peripheral edge of the spring.

4. Flat spring (1; 10; 100; 110) according to Claim 1 or Claim 2 in which the recesses (2b; 220b) are arranged in the vicinity of the braking disk (6).

5. Flat spring (1; 10; 100; 110; 120; 130) according to any one of Claims 1 to 4 in which the at least one first element (3; 300; 330; 340) substantially constitutes the seat (7; 700; 770; 740) for the restraining means (8; 800; 880; 840).

6. Flat spring (1; 10; 100; 110; 130) according to any one of Claims 1 to 5 in which the at least one first element (3; 300; 340) extends as a bridge between the two pads (4; 440).

7. Flat spring (1; 10; 100; 110; 130) according to any one of Claims 1 to 6 in which the transfer arms (2; 240) extend longitudinally along a common axis (X-X; B-B) on the upper surface (4a; 440a) of each pad (4; 440).

8. Flat spring (100) according to any one of Claims 1 to 7 in which the first element (300) has at least one ventilation opening (301).

9. Flat spring (10; 110) according to any one of Claims 1 to 7, comprising catch means (12) for holding the pads (4) against respective shoulders of corresponding seats in the caliper body (9).

10. Flat spring (10) according to Claim 9 in which the catch means (12) comprise appendages (12a) extending from the ends of the transfer arms (2) that are disposed closest to the rear ends (4b) of the pads (4) and terminating in respective hook-shaped portions (12b) for abutting the rear ends (4b) of the pads (4).

11. Flat spring (10) according to Claim 10 in which the hook-shaped portions (12b) are connected to one another by means of a bridge (12c).

12. Flat spring (110) according to Claim 8 in which the catch means are constituted by hook-shaped portions (12b) which extend from the ends of the transfer arms (2) and which abut the rear ends (4b) of the pads (4).

13. Flat spring (120) according to any one of Claims 1 to 5 in which the transfer arms (220) converge substantially towards the braking disk (600) in a manner such as to be connected to the first element (330), forming ventilation passages (220c) between the thrust elements (500) which lie on the same axis (Y-Y), as well as ventilation passages (220b) between thrust elements (500) which are disposed on opposite sides of the disk (600) .

14. Flat spring (120) according to Claim 13, comprising an appendage (331) formed by the first element (330) by the cutting-out and bending of a piece of plate of the spring so as to form a retainer for a cable of an indicator for indicating the degree of wear of the pads (400).

15. Flat spring (130) according to any one of Claims 1 to 7, comprising two first elements (340) which extend in a substantially parallel manner above the two pads (440) and transversely relative thereto.

16. Flat spring (130) according to Claim 15 in which the transfer arms (240) are positioned longitudinally in pairs along axes (B-B) on the upper surfaces (440a) of respective pads (440) so as to form two connecting arms between the two first elements (340) .

17. Flat spring (130) according to Claim 15 or Claim 16 in which the transfer arms (240) are connected to one another end-to-end by means of connecting portions (241) carrying the thrust elements (540).

18. Flat spring (1; 10; 100; 110; 120; 130) according to any one of Claims 1 to 17 in which the transfer arms (2; 220; 240) have ventilation windows (2a, 220a; 240a).

19. Flat spring (1; 10; 100; 110; 120; 130) according to any one of Claims 1 to 18 the material of which is spring steel.

20. Disk-brake caliper (9) comprising a flat spring (1; 10; 100; 110; 120; 130) according to any one of Claims 1 to 19.

21. Vehicle braking systems comprising a disk-brake caliper according to Claim 20, associated with a braking disk (6; 600; 640).

## Patentansprüche

1. Flachfeder (1; 10; 100; 110; 120; 130) für Beläge (4; 400; 440) von Bremssystemen, die einen Bremszangenkörper (9) aufweisen, der sich rittlings über eine Bremsscheibe (6; 600; 640) erstreckt, wobei die Feder Schubelemente (5; 500; 540), die die Beläge (4; 400; 440) zumindest von der Bremsscheibe weg drängen können, wie auch zumindest ein erstes Element (3; 300; 330; 340) umfasst, das zumindest einen Sitz (7; 700; 770; 740) aufweist, welcher Rückhaltemittel (8; 800; 880; 840) unterbringt, um die Feder (1; 10; 100; 110; 120; 130) am Bremszangenkörper (9) zurückzuhalten, wodurch zumindest ein Bereich (21; 771; 741) des Sitzes (7; 700; 770; 740) belastet wird, **dadurch gekennzeichnet, dass** sich Übertragungsarme (2; 220; 240) zum Übertragen der Last der Feder von dem zumindest einen Bereich (21; 771; 741) des Sitzes (7; 700; 770; 740) erstrecken, wobei sich jeder Übertragungsarm im Wesentlichen in einer geraden Linie so weit wie bis zum jeweiligen Schubelement (5; 500; 540) erstreckt, so dass in der Feder Öffnungen (2b; 220b; 240b) geschaffen sind und in der Nähe der Bremsscheibe (6; 600; 640) angeordnet sind, wenn sich die Feder im Betriebszustand befindet.

2. Flachfeder (1; 10; 100; 110; 120; 130) gemäss Anspruch 1, wobei jedes Schubelement (5; 500; 540) durch den jeweiligen übertragungsarm (2; 220; 240) einzeln mit dem zumindest einen Sitz (7; 700; 770; 740) verbunden ist.

3. Flachfeder (1; 10; 100; 110; 120) gemäss Anspruch 1 oder Anspruch 2, wobei die Übertragungsarme (2; 220) die Schubelemente (5; 500) in einer solchen Weise verbinden, dass im Umfangsrand der Feder Vertiefungen (2b; 220b; 220c) gebildet sind.

4. Flachfeder (1; 10; 100; 110) gemäss Anspruch 1 oder Anspruch 2, wobei die Vertiefungen (2b; 220b) in der Nähe der Bremsscheibe (6) angeordnet sind.

5. Flachfeder (1; 10; 100; 110; 120; 130) gemäss einem der Ansprüche 1 bis 4, wobei das zumindest eine erste Element (3; 300; 330; 340) im Wesentlichen den Sitz (7; 700; 770; 740) für die Rückhaltemittel (8; 800; 880; 840) bildet.

6. Flachfeder (1; 10; 100; 110; 130) gemäss einem der Ansprüche 1 bis 5, wobei sich das zumindest eine erste Element (3; 300; 340) als eine Brücke zwischen den beiden Belägen (4; 440) erstreckt.

7. Flachfeder (1; 10; 100; 110; 130) gemäss einem der Ansprüche 1 bis 6, wobei sich die Übertragungsarme (2; 240) an der oberen Oberfläche (4a; 440a) jedes Belags (4; 440) entlang einer gemeinsamen Achse (X-X; B-B) längsgerichtet erstrecken.

8. Flachfeder (100) gemäss einem der Ansprüche 1 bis 7, wobei das erste Element (300) zumindest eine Lüftungsöffnung (301) aufweist.

9. Flachfeder (10; 110) gemäss einem der Ansprüche 1 bis 7, umfassend Fangmittel (12), um die Beläge (4) gegen jeweilige Schultern von entsprechenden Sitzen im Bremszangenkörper (9) zu halten.

10. Flachfeder (10) gemäss Anspruch 9, wobei die Fangmittel (12) Fortsätze (12a) umfassen, die sich von jenen Enden der Übertragungsarme (2) erstrecken, die am nächsten an den hinteren Enden (4b) der Beläge (4) gelegen sind, und in jeweiligen hakenförmigen Abschnitten (12b) enden, um gegen die hinteren Enden (4b) der Beläge (4) zu stossen.

11. Flachfeder (10) gemäss Anspruch 10, wobei die hakenförmigen Abschnitte (12b) durch eine Brücke (12c) miteinander verbunden sind.

12. Flachfeder (110) gemäss Anspruch 8, wobei die Fangmittel durch hakenförmige Abschnitte (12b) gebildet sind, die sich von den Enden der übertragungsarme (2) erstrecken und gegen die hinteren Enden (4b) der Beläge (4) stossen.

13. Flachfeder (120) gemäss einem der Ansprüche 1 bis 5, wobei die Übertragungsarme (220) im Wesentlichen in einer solchen Weise zur Bremsscheibe (600) hin zusammenlaufen, dass sie mit dem ersten Element (330) verbunden sind, wodurch zwischen den Schubelementen (500) Lüftungsdurchgänge (220c) gebildet sind, die auf der gleichen Achse (Y-Y) liegen, wie auch Lüftungsdurchgänge (220b) zwischen Schubelementen (500) liegen, die an gegenüberliegenden Seiten der Scheibe (600) angeordnet sind.

14. Flachfeder (120) gemäss Anspruch 13, umfassend einen Fortsatz (331), der durch das erste Element (330) durch das Ausschneiden und Biegen eines Stücks der Platte der Feder gebildet ist, um einen Rückhalter für ein Kabel eines Anzeigers zum Anzeigen des Grads der Abnutzung der Beläge (400) zu bilden.

15. Flachfeder (130) gemäss einem der Ansprüche 1 bis 7, umfassend zwei erste Elemente (340), die sich in einer im Wesentlichen parallelen Weise über den beiden Belägen (440) und in Bezug dazu quer erstrecken.

16. Flachfeder (130) gemäss Anspruch 15, wobei die Übertragungsarme (240) an den oberen Oberflächen (440a) von jeweiligen Belägen (440) längsgerichtet in Paaren entlang Achsen (B-B) gelegen sind, um zwischen den beiden ersten Elementen (340) zwei verbindende Arme zu bilden.

17. Flachfeder (130) gemäss Anspruch 15 oder Anspruch 16, wobei die Übertragungsarme (240) durch verbindende Abschnitte (241), die die Schubelemente (540) tragen, miteinander Ende an Ende verbunden sind.

18. Flachfeder (1; 10; 100; 110; 120; 130) gemäss einem der Ansprüche 1 bis 17, wobei die Übertragungsarme (2; 220; 240) Lüftungsfenster (2a; 220a; 240a) aufweisen.

19. Flachfeder (1; 10; 100; 110; 120; 130) gemäss einem der Ansprüche 1 bis 18, deren Material Federstahl ist.

20. Scheibenbremsen-Bremszange (9), umfassend eine Flachfeder (1; 10; 100; 110; 120; 130) gemäss einem der Ansprüche 1 bis 19.

21. Fahrzeugbremssysteme, umfassend eine Scheibenbremsen-Bremszange gemäss Anspruch 20, die einer Bremsscheibe (6; 600; 640) zugeordnet ist.

## Revendications

1. Ressort plat (1 ; 10 ; 100 ; 110 ; 120 ; 130) destiné à des plaquettes (4 ; 400 ; 440) de systèmes de frein, comprenant un corps d'étrier de frein (9) s'étendant à califourchon sur un disque de frein (6 ; 600 ; 640), le ressort comprenant des éléments de poussée (5 ; 500 ; 540) qui peuvent pousser les plaquettes (4 ; 400 ; 440) au moins à distance du disque de frein, ainsi qu'au moins un premier élément (3 ; 300 ; 330 ; 340) ayant au moins un siège (7 ; 700 ; 770 ; 740) qui loge des moyens de limitation (8 ; 800 ; 880 ; 840) pour limiter le ressort (1 ; 10 ; 100 ; 110 ; 120 ; 130) sur le corps d'étrier de frein (9), chargeant au moins une zone (21 ; 771 ; 741) du siège (7 ; 700 ; 770 ; 740), **caractérisé en ce que** des bras de transfert (2 ; 220 ; 240) pour transférer la charge du ressort s'étendent de la au moins une zone (21 ; 771 ; 741) du siège (7 ; 700 ; 770 ; 740), chaque bras de transfert s'étendant sensiblement en ligne droite jusqu'à l'élément de poussée (5 ; 500 ; 540) respectif de sorte que des ouvertures (2b ; 220b ; 240b) sont créées dans le ressort et sont agencées à proximité du disque de frein (6 ; 600 ; 640) lorsque le ressort est dans des conditions opérationnelles.

2. Ressort plat (1 ; 10 ; 100 ; 110 ; 120 ; 130) selon la revendication 1 dans lequel chaque élément de poussée (5 ; 500 ; 540) est raccordé au au moins un siège (7 ; 700 ; 770 ; 740) individuellement au moyen du bras de transfert (2 ; 220 ; 240) respectif.

3. Ressort plat (1 ; 10 ; 100 ; 110 ; 120) selon la revendication 1 ou 2, dans lequel les bras de transfert (2 ; 220) raccordent les éléments de poussée (5 ; 500) afin de créer des enfoncements (2b ; 220b ; 220c) dans le bord périphérique du ressort.

4. Ressort plat (1 ; 10 ; 100 ; 110) selon la revendication 1 ou la revendication 2 dans lequel les enfoncements (2b ; 220b) sont agencés à proximité du disque de frein (6).

5. Ressort plat (1 ; 10 ; 100 ; 110 ; 120 ; 130) selon l'une quelconque des revendications 1 à 4, dans lequel le au moins un premier élément (3 ; 300 ; 330 ; 340) constitue sensiblement le siège (7 ; 700 ; 770 ; 740) pour les moyens de limitation (8 ; 800 ; 880 ; 840).

6. Ressort plat (1 ; 10 ; 100 ; 110 ; 130) selon l'une quelconque des revendications 1 à 5, dans lequel le au moins un premier élément (3 ; 300 ; 340) s'étend comme un pont entre les deux plaquettes (4 ; 400).

7. Ressort plat (1 ; 10 ; 100 ; 110 ; 130) selon l'une quelconque des revendications 1 à 6, dans lequel les bras de transfert (2 ; 240) s'étendent longitudinalement le long d'un axe commun (X-X ; B-B) sur la surface supérieure (4a ; 440a) de chaque plaquette (4 ; 440).

8. Ressort plat (100) selon l'une quelconque des revendications 1 à 7, dans lequel le premier élément (300) possède au moins une ouverture de ventilation (301).

9. Ressort plat (10 ; 110) selon l'une quelconque des revendications 1 à 7, comprenant des moyens d'accrochage (12) pour maintenir les plaquettes (4) contre les épaulements respectifs des sièges correspondants dans le corps d'étrier de frein (9).

10. Ressort plat (10) selon la revendication 9, dans lequel les moyens d'accrochage (12) comprennent des prolongements (12a) s'étendant à partir des extrémités des bras de transfert (2) qui sont disposées le plus près des extrémités arrière (4b) des plaquettes (4) et se terminant par des parties en forme de crochet (12b) respectives pour venir en butée contre les extrémités arrière (4b) des plaquettes (4).

11. Ressort plat (10) selon la revendication 10, dans lequel les parties en forme de crochet (12b) sont raccordées entre elles au moyen d'un pont (12c).

12. Ressort plat (110) selon la revendication 8, dans lequel les moyens d'accrochage sont constitués par les parties en forme de crochet (12b) qui s'étendent à partir des extrémités des bras de transfert (2) et qui viennent en butée contre les extrémités arrière (4b) des plaquettes (4).

13. Ressort plat (120) selon l'une quelconque des revendications 1 à 5, dans lequel les bras de transfert (220) convergent sensiblement vers le disque de freinage (600) afin d'être raccordés au premier élément (330), formant des passages de ventilation (220c) entre les éléments de poussée (500) qui se trouvent sur le même axe (Y-Y), ainsi que des passages de ventilation (220b) entre les éléments de poussée (500) qui sont disposés sur les côtés opposés du disque (600).

14. Ressort plat (120) selon la revendication 13, comprenant un prolongement (331) formé par le premier élément (330) par la découpe et le pliage d'une pièce de plaque du ressort afin de former un élément de retenue destiné à un câble d'un indicateur pour indiquer le degré d'usure des plaquettes (400).

15. Ressort plat (130) selon l'une quelconque des revendications 1 à 7, comprenant deux premiers éléments (340) qui s'étendent d'une manière sensiblement parallèle au-dessus des deux plaquettes (440) et transversalement par rapport à celles-ci.

16. Ressort plat (130) selon la revendication 15, dans lequel les bras de transfert (240) sont positionnés longitudinalement en paires le long des axes (B-B) sur les surfaces supérieures (440a) des plaquettes (440) respectives afin de former deux bras de raccordement entre les deux premiers éléments (340).

17. Ressort plat (130) selon la revendication 15 ou la revendication 16, dans lequel les bras de transfert (240) sont raccordés entre eux bout à bout au moyen de parties de raccordement (241) supportant les éléments de poussée (540).

18. Ressort plat (1 ; 10; 100; 110; 120; 130) selon l'une quelconque des revendications 1 à 17, dans lequel les bras de transfert (2 ; 220 ; 240) possèdent des fenêtres de ventilation (2a ; 220a ; 240a).

19. Ressort plat (1 ; 10; 100; 110; 120; 130) selon l'une quelconque des revendications 1 à 18, dont le matériau est un acier à ressort.

20. Etrier de frein à disque (9) comprenant un ressort plat (1 ; 10 ; 100 ; 110 ; 120 ; 130) selon l'une quelconque des revendications 1 à 19.

21. Systèmes de frein de véhicule comprenant un étrier de frein à disque selon la revendication 20, associé à un disque de frein (6 ; 600 ; 640).
